# EUROPEAN PATENT SPECIFICATION

(11) **EP 3 997 150 B1**
(45) Date of publication and mention of the grant of the patent: **30.09.2026**
(21) Application number: 20740142.3
(22) Date of filing: 24.06.2020
(51) Int. Cl.: C08G 18/72, C08G 18/76, C08G 18/63, C08G 18/40, C08G 18/48, C08F 283/06, C08F 20/36, C08F 212/14

(54) **POLYMER POLYOL COMPOSITIONS AND THEIR USE IN THE PRODUCTION OF FLEXIBLE POLYURETHANE FOAMS**
POLYMERPOLYOLZUSAMMENSETZUNGEN UND IHRE VERWENDUNG ZUR HERSTELLUNG VON POLYURETHAN-WEICHSCHAUMSTOFFEN
COMPOSITIONS DE POLYOL POLYMÈRE ET LEUR UTILISATION DANS LA PRODUCTION DE MOUSSES DE POLYURÉTHANE SOUPLES

(30) Priority: 10.07.2019 US 201962872445 P
(43) Date of publication of application: 18.05.2022
(73) Proprietor: Covestro LLC, Pittsburgh, PA 15205 (US)
(72) Inventor: ADKINS, Rick L., Canonsburg, Pennsylvania 15317 (US); NEAL, Brian L., Pittsburgh, Pennsylvania 15241 (US); FRAZEE, Andrew S., Alpharetta, Georgia 30022 (US)
(74) Representative: Levpat
(86) International application number: PCT/US2020/039287
(87) International publication number: WO 2021/007030

(56) References cited:
- WO-A1-2013/116092
- WO-A1-2018/132401
- ANONYMOUS: "Aryl - Wikipedia", 9 May 2020 (2020-05-09), XP055723955, Retrieved from the Internet <URL:https://en.wikipedia.org/wiki/Aryl> [retrieved on 20200820]

## Description

### FIELD

This specification pertains generally to polymer polyol compositions that include polymer particles produced from an ethylenically unsaturated compound produced by reacting amine-reactive ethylenically unsaturated compound with an amino diphenylamine, as well as to the use of such polymer polyol compositions in the production of flexible polyurethane foams.

### BACKGROUND

Polymer polyols, also known as filled polyols, are dispersions of polymer particles in a base polyol. They can be particularly suitable for preparing foams with higher hardness levels than a conventional, unmodified, polyol can produce and are often used in the production of flexible polyurethane foams by reacting the polyol with a polyisocyanate in the presence of a blowing agent and other ingredients, such as catalyst, surfactant and antioxidant. In many cases, the polyol is a polyether polyol that is an alkoxylation reaction product of one or more H-functional starters and one or more alkylene oxides. Often, due to the hydrophobic quality produced in the resulting polyether polyol, propylene oxide is the primary or sole alkylene oxide employed.

One drawback of polyether polyols, particular those produced using propylene oxide as the alkylene oxide, is that they can be susceptible to thermal oxidative degradation, which can produce a variety of volatile organic compounds (VOCs), such as formaldehyde and acetaldehyde. As a result, antioxidants (AOs) are often used to reduce the thermal oxidative degradation of polyether polyols. Aminic antioxidants are sometimes used and can be very effective at reducing VOC emissions in polyurethane foam raw materials, such as polyols, and polyurethane foams. However, aminic AOs are sometimes disfavored because they themselves are often detected as a VOC during the emissions testing of foam. Therefore, phenolic antioxidants are often used as an alternative to aminic AOs. The use of phenolic antioxidant alone, however, may not be sufficient to meet stringent VOC emission and other requirements for the resulting foam. The use of phenolic antioxidant alone is for example disclosed in WO 2013/116092 A1.

As a result, it would be desirable to provide polymer polyol compositions that include an AO that is particularly effective at reducing VOC emissions from the polymer polyol composition as well as to flexible polyurethane foams formed therefrom, particularly emissions of formaldehyde and acetaldehyde, but is not detected as a VOC during emissions testing of the foam.

### SUMMARY

In certain respects, this specification is directed toward polymer polyol compositions that comprise polymer particles dispersed in a base polyol that has a functionality of 2 to 8 and an OH number of 20 to 400 mg KOH/g. The polymer particles comprise the reaction product of a reaction mixture comprising: (1) an ethylenically unsaturated compound; (2) a preformed stabilizer; and (3) a free radical initiator. The preformed stabilizer comprises the reaction product of a reaction mixture comprising: (a) an ethylenically unsaturated macromer; (b) an ethylenically unsaturated compound; and (c) a free radical initiator, in which the ethylenically unsaturated compound comprises the reaction product of a reaction mixture comprising: (i) a starter having a functionality of 2 to 8 and a hydroxyl number of 20 to 50; and (ii) an ethylenically unsaturated hydroxyl-reactive compound. The polymer particles comprise units derived from an ethylenically unsaturated compound of the structure: 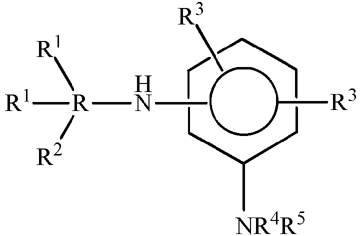 in which R is an aryl radical, each R¹ is independently hydrogen, a C₁-C₄ alkyl radical, or a C₁-C₄ alkoxy radical, R₂ is hydrogen or a C₁-C₄ alkyl radical, each R³ is independently hydrogen, a C₁-C₄ alkyl radical, a C₁-C₄ alkoxy radical, or a radical of the formula: 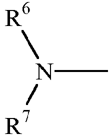 in which R⁶ is a C₁-C₁₂ alkyl radical, a C₅-C₁₂ cycloalkyl radical, a C₆-C₁₂ aryl radical, or a C₇-C₁₃ aralkyl radical, and R⁷ is hydrogen or a C₁-C₁₂ alkyl radical, and R⁴ and R⁵ are each independently hydrogen or an ethylenically unsaturated moiety derived from an amine-reactive ethylenically unsaturated compound, with the proviso that at least one of R⁴ and R⁵ is an ethylenically unsaturated moiety derived from an amine-reactive ethylenically unsaturated compound.

The present specification is also directed to foam-forming compositions that include such polymer polyol compositions, flexible foams produced from such foam-forming compositions, and methods of producing flexible foams using such foam-forming compositions.

### DETAILED DESCRIPTION

Various implementations are described and illustrated in this specification to provide an overall understanding of the structure, function, properties, and use of the disclosed inventions.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein.

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. In the production of polyurethane foams, the hydroxyl groups react with isocyanate groups, -NCO, that are attached to the isocyanate compound. The term "hydroxyl number" or "OH number" refers to the number of reactive hydroxyl groups available for reaction, and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

As used herein, "monomer" means the simple unpolymerized form of a chemical compound having relatively low molecular weight, e.g., acrylonitrile, styrene, methyl methacrylate, and the like.

As used herein, "ethylenically unsaturated compound" means a compund containing ethylenic unsaturation (C=C, i.e., two double bonded carbon atoms) that is capable of undergoing free radically induced addition polymerization reactions. As used herein, the term "amine-reactive ethylenically unsaturated compound" refers to an ethylenically unsaturated compound that also comprises at least one functional group that is chemically reactive with an amine.

As used herein, "pre-formed stabilizer" means an intermediate obtained by reacting a macromer containing reactive unsaturation (e.g. acrylate, methacrylate, maleate, etc.) with one or more monomers (i.e. acrylonitrile, styrene, methyl methacrylate, etc.), with and at least one free radical initiator, in the presence of a polymer control agent (PCA) and, optionally, in a diluent, to give a co-polymer (i.e. a dispersion having e.g. a low solids content (e.g. <30%), or soluble grafts, etc.).

As used herein "viscosity" is in millipascal-seconds (mPas) measured at 25°C on an Anton Paar SVM3000 viscometer.

As indicated, certain implementations of the present specification are directed to polymer polyol compositions. Such compositions comprise a dispersion of polymer particles in a base polyol. More particularly, in the polymer polyol compositions of this specification, the polymer particles comprise units derived from an ethylenically unsaturated compound of the structure: 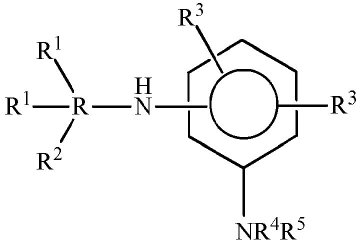 in which R is an aryl radical, each R¹ is independently hydrogen, a C₁-C₄ alkyl radical, or a C₁-C₄ alkoxy radical, R₂ is hydrogen or a C₁-C₄ alkyl radical, each R³ is independently hydrogen, a C₁-C₄ alkyl radical, a C₁-C₄ alkoxy radical, or a radical of the formula: 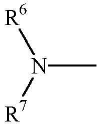 in which R⁶ is a C₁-C₁₂ alkyl radical, a C₅-C₁₂ cycloalkyl radical, a C₆-C₁₂ aryl radical, or a C₇-C₁₃ aralkyl radical, and R⁷ is hydrogen or a C₁-C₁₂ alkyl radical, and R⁴ and R⁵ are each independently hydrogen or an ethylenically unsaturated moiety derived from an amine-reactive ethylenically unsaturated compound, with the proviso that at least one of R⁴ and R⁵ is an ethylenically unsaturated moiety derived from an amine-reactive ethylenically unsaturated compound. Such units may be incorporated into the structure of the polymer particles by a variety of methods, including those mentioned below.

Such ethylenically unsaturated compounds can be produced by reacting amine-reactive ethylenically unsaturated compound with an amino diphenylamine of the structure: 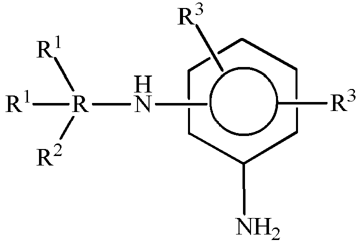 in which R is an aryl radical, each R¹ is independently hydrogen, a C₁-C₄ alkyl radical, or a C₁-C₄ alkoxy radical, R₂ is hydrogen or a C₁-C₄ alkyl radical, and each R³ is independently hydrogen, a C₁-C₄ alkyl radical, a C₁-C₄ alkoxy radical, or a radical of the formula: 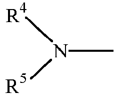 in which R⁴ is a C₁-C₁₂ alkyl radical, a C₅-C₁₂ cycloalkyl radical, a C₆-C₁₂ aryl radical, or a C₇-C₁₃ aralkyl radical, and R⁵ is hydrogen or a C₁-C₁₂ alkyl radical.

Specific examples of such amines include, but are not limited to, any of the isomers of aminodiphenylamine, such as 4-aminodiphenylamine, 3-aminodiphenylamine, and 2-aminodiphenylamine, 4-amino-4'-methyl diphenylamine, 4-amino-4'-methoxy diphenylamine, 4-amino-4'-ethoxy diphenylamine, 4-amino-4'-(N,N-dimethylamine) diphenylamine, and 4-amino-4'-isopropyl diphenylamine.

Exemplary amine-reactive ethylenically unsaturated compounds for reaction with the foregoing amino diphenylamine include, for example, ethylenically unsaturated compounds that contain acid, acid anhydride, oxirane, and/or isocyanate functionality. Specific examples of suitable ethylenically unsaturated carboxylic acids are maleic acid, fumaric acid, itaconic acid, acrylic acid, methacrylic acid, and crotonic acid. Specific examples of suitable ethylenically unsaturated acid anhydrides are maleic anhydride and itaconic anhydride. Specific examples of suitable ethylenically unsaturated oxiranes are glycidyl acrylate, glycidyl methacrylate, and glycidyl ethacrylate, and 4-vinyl-1-cyclohexene-1,2-epoxide. Specific examples of suitable ethylenically unsaturated isocyanates are isopropenyl dimethyl benzyl isocyanate, 2-isocyanatoethyl methacrylate, adduct of isophorone diisocyanate and 2-hydroxyethyl methacrylate, and adducts of toluenediisocyanate and 2-hydroxypropyl acrylate.

Examples of such reactions are illustrated below. Reaction I illustrates the reaction of a diamine with glycidyl methacrylate, whereas Reaction II illustrates the diamine reacted with isopropenyl dimethylbenzylisocyanate.

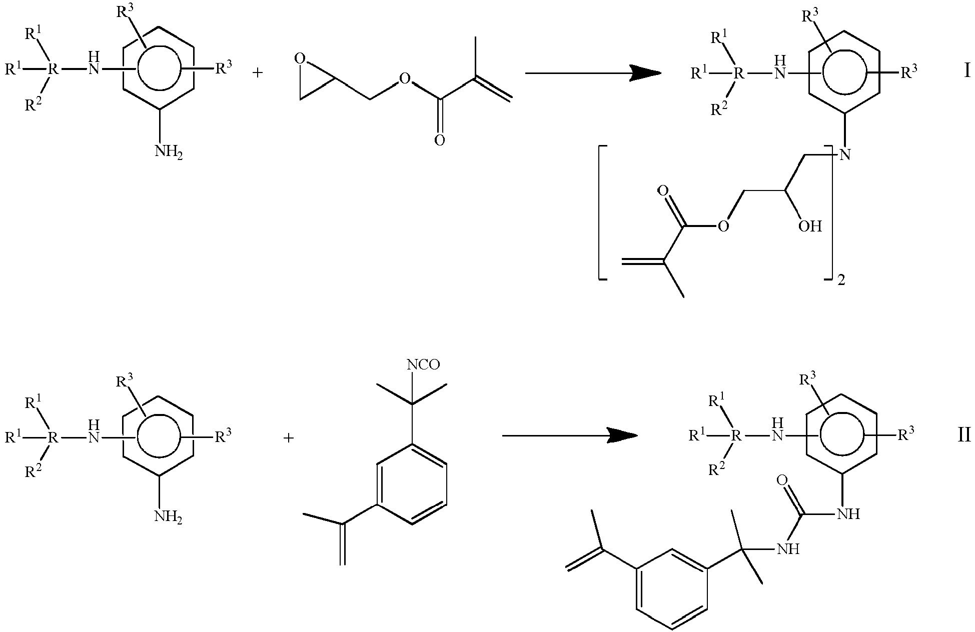

As those skilled in the art will recognize, the conditions for the amine reaction with the amine-reactive ethylenically unsaturated compounds will vary depending on the specific type of amine-reactive ethylenically unsaturated compound. In general, the temperature may vary between 25°C to 250°C, the pressure between 5 millibar to 4 bar, and the reaction time between 0.5 to 30 hours. Nitrogen or other inert gases may optionally be used during the process.

As previously indicated, certain implementations of the present specification are directed to polymer polyol compositions comprising a dispersion of polymer particles in a base polyol, wherein the polymer particles comprise units derived from the ethylenically unsaturated compound described above. In some embodiments, the polymer polyol compositions have a solids content, *i.e.,* content of polymer particles, of 30% by weight to 75% by weight, such as 35% by weight to 70% by weight, 40% by weight to 60% by weight, or 45% by weight to 55% by weight, based on the total weight of the polymer polyol composition. Moreover, in certain implementations, the polymer polyol composition has a viscosity (as defined above) of less than 50,000 mPas, such as less than 40,000 mPas, less than 30,000 mPas, less than 20,000 mPas or, in some cases, less than 10,000 mPas.

In some embodiments, the polymer polyol composition comprises a reaction product of a reaction mixture comprising: (a) a base polyol having a functionality of 2 to 8 and a hydroxyl number of 20 to 400 mg KOH/g; (b) an ethylenically unsaturated compound, (c) a preformed stabilizer, and (d) a free radical initiator.

Suitable base polyols include, for example, polyether polyols having a functionality of 2 to 8, such as 2 to 6 or 3 to 6, and an OH number of 20 to 400 mg KOH/g, 20 to 200 mg KOH/g, 20 to 150 mg KOH/g, 20 to 100 mg KOH/g, or, in some cases, 20 to 50 mg KOH/g, 25 to 50 mg KOH/g, or 30 to 50 mg KOH/g. Specific examples of suitable base polyols include polyether polyols, such as polyoxyethylene glycols, polyoxyethylene triols, polyoxyethylene tetrols and higher functionality polyoxyethylene polyols, polyoxypropylene glycols, polyoxypropylene triols, polyoxypropylene tetrols and higher functionality polyoxypropylene polyols, and mixtures thereof. When mixtures as used, the ethylene oxide and propylene oxide may be added simultaneously or sequentially to provide internal blocks, terminal blocks or a random distribution of the oxyethylene groups and/or oxypropylene groups in the polyether polyol. Suitable starters or initiators for these compounds include, for example, ethylene glycol, propylene glycol, diethylene glycol, dipropylene glycol, tripropylene glycol, trimethylol-propane, glycerol, pentaerythritol, sorbitol, sucrose, ethylenediamine, and toluene diamine, among others. The alkoxylation reaction may be catalyzed using any conventional catalyst including, for example, potassium hydroxide (KOH) or a double metal cyanide (DMC) catalyst.

Other suitable polyether polyols include alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above.

Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-, 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, mannitol, and the like.

Other polyols which can be employed include the alkylene oxide adducts of non-reducing sugars, wherein the alkoxides have from 2 to 4 carbon atoms. Non-reducing sugars and sugar derivatives include sucrose, alkyl glycosides such as methyl glycoside and ethyl glucoside, glycol glucosides, such as ethylene glycol glycoside, propylene glycol glucoside, glycerol glucoside, and 1,2,6-hexanetriol glucoside, as well as alkylene oxide adducts of the alkyl glycosides.

Still other suitable polyols include the polyphenols, such as the alkylene oxide adducts thereof, wherein the alkylene oxides have from 2 to 4 carbon atoms. Among the polyphenols which are suitable are, for example, bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis(hydroxyphenol)ethanes.

The alkylene oxide adducts of phosphorus and polyphosphorus acid are also suitable polyols for preparing the polyfunctional acetoacetic acid ester. These include ethylene oxide, 1,2-epoxy-propane, the epoxybutanes, 3-chloro-1,2-epoxypropane as alkylene oxides. Phosphoric acid, phosphorus acid, polyphosphoric acids, such as tripolyphosphoric acid, and the polymetaphosphoric acids are suitable for use.

In some implementations, the base polyol comprises an aminocrotonate reaction product of a reaction mixture comprising a polyfunctional acetoacetic acid ester and an amine, such as where the polyfunctional acetoacetic acid ester is the reaction product of reaction mixture comprising: (i) a polyol with a functionality of 2 to 8 and an OH number of 20 to 400 mg KOH/g; and (ii) an alkyl-substituted acetoacetate.

In certain implementations, the polyol used to prepare the polyfunctional acetoacetic acid ester comprises a polyether polyol having a functionality of 2 to 8, such as 2 to 6 or 3 to 6, and an OH number of 20 to 400 mg KOH/g, 20 to 200 mg KOH/g, 20 to 150 mg KOH/g, 20 to 100 mg KOH/g, or, in some cases, 20 to 50 mg KOH/g, 25 to 50 mg KOH/g, or 30 to 50 mg KOH/g and can comprise, for example, any of the polyols described above.

The polyfunctional acetoacetic acid ester can be prepared by, for example, transesterifying any of the above described polyols with an alkyl acetoacetate containing one to five carbon atoms in the alkyl group. Specific useful acetoacetates include methyl acetoacetate, ethyl acetoacetate, t-butyl acetoacetate, propyl acetoacetate and the like. In preparing the acetoacetic acid ester, a transesterification catalyst may be used and it may be desirable that the reactants are used in amounts such that one OH group is present for each acetoacetate group. However, it is also possible to use excess amounts of either reactant. In fact, it may be desirable to use an excess of the acetoacetate to ensure complete reaction.

To produce the aminocrotonate reaction product, the resulting polyfunctional acetoacetic acid ester is then reacted with an amino diphenylamine of the structure: 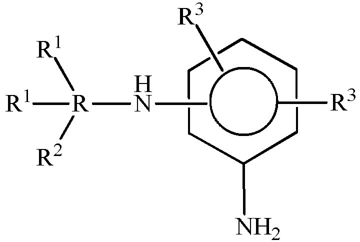 in which R is an aryl radical, each R¹ is independently hydrogen, a C₁-C₄ alkyl radical, or a C₁-C₄ alkoxy radical, R₂ is hydrogen or a C₁-C₄ alkyl radical, and each R³ is independently hydrogen, a C₁-C₄ alkyl radical, a C₁-C₄ alkoxy radical, or a radical of the formula: 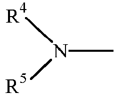 in which R⁴ is a C₁-C₁₂ alkyl radical, a C₅-C₁₂ cycloalkyl radical, a C₆-C₁₂ aryl radical, or a C₇-C₁₃ aralkyl radical, and R⁵ is hydrogen or a C₁-C₁₂ alkyl radical.

Specific examples of such amines include, but are not limited to, any of the isomers of aminodiphenylamine, such as 4-aminodiphenylamine, 3-aminodiphenylamine, and 2-aminodiphenylamine, 4-amino-4'-methyl diphenylamine, 4-amino-4'-methoxy diphenylamine, 4-amino-4'-ethoxy diphenylamine, 4-amino-4'-(N,N-dimethylamine) diphenylamine, and 4-amino-4'-isopropyl diphenylamine.

In certain implementations, a catalyst is used to catalyst the aminocrotonate reaction. In some cases, the catalyst is selected from the group consisting of boron trifluoride etherate, and organic acids having pKa values of from 0.01 to 0.8, such as trifluoroacetic acid (pKa: 0.23), p-toluene sulfonic acid (pKa: 0.7) and halogenated organic acids having pKa values of 0.1 to 0.8. The amount of catalyst is generally selected so as to be sufficient to allow reasonable reaction times. In practice, the catalyst is added in amounts of from 0.05 to 2.0 mol %, such as 0.3 to 1.0 mol %, based on the equivalents of acetoacetate present, which corresponds to 0.01 to 0.2% by weight, such as 0.05 to 0.1% by weight, based on the weight of the polyfunctional acetoacetic acid ester.

The amount of amino diphenylamine is generally selected so that one mole of amine is available for every acetoacetate equivalent. It is of course possible to react less than one mole amine with one equivalent of acetoacetate. This might result in a lower conversion if the reaction is terminated before all acetoacetate groups have reacted with amine groups, or in chain extension if all acetoacetate groups have reacted. On the other hand, in order to suppress chain extension and to obtain low viscosity products, it might be advantageous to use more than one mole amine per equivalent of acetoacetate. The unreacted amine can either be stripped off once the reaction is complete, or can remain in the product.

The reaction is generally carried out at a temperature of 40° to 200°C, such as 90° to 140°C, under excess pressure, reduced pressure, or, in some cases, in the substantial absence of pressure. The process can be conducted continuously or discontinuously. In general, the acetoacetic acid ester, the amines, and the catalyst can be reacted in the following order: acetoacetylated polyol, followed by amine and the catalyst. The reaction is considered complete when, the IR spectrum, the peak at 1740 cm⁻ has disappeared and by the amount of water collected. The reaction time, of course, depends on the nature and the amounts of starting materials. In general, reaction times are between 1 and 6 hours. When the reaction is complete, the catalyst and any unreacted amine (if desired) are distilled off. The distillate can generally be recycled.

Of course, blends or mixtures of various useful polyols may be used if desired.

In addition to, or in lieu of, the ethylenically unsaturated compound described above that is the reaction product of an amine-reactive ethylenically unsaturated compound and an amino diphenylamine, suitable ethylenically unsaturated compounds for use in the reaction mixture to produce the polymer polyol composition include, for example, aliphatic conjugated dienes, such as butadiene and isoprene, monovinylidene aromatic monomers, such as styrene, α-methyl-styrene, (t-butyl)styrene, chlorostyrene, cyanostyrene and bromostyrene; α,β-ethylenically unsaturated carboxylic acids and esters thereof, such as acrylic acid, methacrylic acid, methyl methacrylate, ethyl acrylate, 2-hydroxyethyl acrylate, butyl actylate, itaconic acid, and maleic anhydride, α,β-ethylenically unsaturated nitriles and amides, such as acrylonitrile, methacrylonitrile, acrylamide, methacrylamide, N,N-dimethyl acrylamide, and N-(dimethylaminomethyl)-acrylamide, vinyl esters, such as vinyl acetate, vinyl ethers, vinyl ketones, and vinyl and vinylidene halides, among others. Of course, mixtures of two or more of the aforementioned monomers are also suitable. In some embodiments, the ethylenically unsaturated compound comprises at least one of styrene and its derivatives, acrylonitrile, methyl acrylate, methyl methacrylate, and vinylidene chloride.

In some embodiments, the ethylenically unsaturated compound comprises styrene and acrylonitrile. More specifically, in some implementations, styrene and acrylonitrile are used in sufficient amounts such that the weight ratio of styrene to acrylonitrile (S:AN) is within the range of 80:20 to 20:80, such as 75:25 to 25:75. The S:AN ratio is not critical for the ethylenically unsaturated compound that is the reaction product of an amine-reactive ethylenically unsaturated compound and an amino diphenylamine. This may be used in 0.1 wt% to 20 wt%, based on the total ethylenically unsaturated compound content, regardless of the S:AN ratio.

In some implementations, the pre-formed stabilizer used to produce the polymer polyol composition comprises the reaction product of a reaction mixture comprising: (a) a macromer that contains reactive unsaturation, (b) an ethylenically unsaturated compound, (c) a free radical initiator, (d) a polymer control agent; and, in some cases, (e) a chain transfer agent.

In some implementations, the macromer utilized to produce the pre-formed stabilizer comprises the reaction product of a reaction mixture comprising: (i) an H-functional starter having a functionality of 2 to 8 and a hydroxyl number of 20 to 50; (ii) from 0.1 to 3% by weight, based on 100% by weight of the sum of components (i), (ii) and (iii), of a hydroxyl-reactive compound that contains reactive unsaturation; and (iii) from 0 to 3% by weight, such as 0.05 to 2.5% by weight, or 0.1 to 1.5% by weight, based on 100% by weight of the sum of components (i), (ii) and (iii), of a diisocyanate.

Suitable preformed stabilizers can be prepared by reacting a combination of components (a), (b), (c) and (d), and optionally, (e), as described above, in a reaction zone maintained at a temperature sufficient to initiate a free radical reaction, and under sufficient pressure to maintain only liquid phases in the reaction zone, for a sufficient period of time to react (a), (b) and (c); and recovering a mixture containing the preformed stabilizer dispersed in the polymer control agent.

Suitable starters for use in preparing the macromer include compounds having a hydroxyl functionality of 2 to 8, such as 3 to 6, and a hydroxyl number of 20 to 50, such as 25 to 40. A specific example of a suitable starter is an alkylene oxide adduct of a hydroxyl functional compound, such as ethylene glycol, propylene glycol, diethylene glycol, dipropylene glycol, tripropylene glycol, glycerin, trimethylolpropane, pentaerythritol, sorbitol, ethylenediamine, and toluene diamine, among others, including mixtures of any two or more thereof, in which the alkylene oxide comprises, for example, propylene oxide, ethylene oxide, butylene oxide, or styrene oxide, among others, including mixtures of any two or more thereof. When a mixture of alkylene oxides are used to form the starter, a mixture of propylene oxide and ethylene oxide may be advantageous. Such mixtures may be added simultaneously (*i.e.* two or more alkylene oxide are added as co-feeds), or sequentially (one alkylene oxide is added first, and then another alkylene oxide is added). It is possible to use a combination of simultaneous and sequential addition of alkylene oxides. In one embodiment, an alkylene oxide such as propylene oxide may be added first, and then a second alkylene oxide such as ethylene oxide added as a cap.

Other examples of suitable starters for preparing the macromer are polyoxyethylene glycols, triols, tetrols and higher functionality polyols, and mixtures thereof, as well as alkylene oxide adducts of non-reducing sugars and sugar derivatives, alkylene oxide adducts of phosphorus and polyphosphorus acids, alkylene oxide adducts of polyphenols, polyols prepared from natural oils such as, for example, castor oil, and alkylene oxide adducts of polyhydroxyalkanes other than those described above. Illustrative alkylene oxide adducts of polyhydroxyalkanes include, for example, alkylene oxide adducts of 1,3-dihydroxypropane, 1,3-dihydroxybutane, 1,4-dihydroxybutane, 1,4-, 1,5- and 1,6-dihydroxyhexane, 1,2-, 1,3-, 1,4-, 1,6- and 1,8-dihydroxyoctant, 1,10-dihydroxydecane, glycerol, 1,2,4-tirhydroxybutane, 1,2,6-trihydroxyhexane, 1,1,1-trimethyl-olethane, 1,1,1-trimethylolpropane, pentaerythritol, caprolactone, polycaprolactone, xylitol, arabitol, sorbitol, and mannitol. Specific examples of alkylene oxide adducts of non-reducing sugars, include those where the alkoxides have from 2 to 4 carbon atoms. Non-reducing sugars and sugar derivatives include sucrose, alkyl glycosides, such as methyl glycoside and ethyl glucoside, glycol glucosides, such as ethylene glycol, glycoside, propylene glycol glucoside, glycerol glucoside, and 1,2,6-hexanetriol glucoside, and alkylene oxide adducts of the alkyl glycosides. Other suitable polyols starters for preparing the macromer include polyphenols, such as alkylene oxide adducts thereof, wherein the alkylene oxides have from 2 to 4 carbon atoms. Suitable polyphenols include, for example bisphenol A, bisphenol F, condensation products of phenol and formaldehyde, the novolac resins, condensation products of various phenolic compounds and acrolein, including the 1,1,3-tris(hydroxy-phenyl)propanes, condensation products of various phenolic compounds and glyoxal, glutaraldehyde, other dialdehydes, including the 1,1,2,2-tetrakis (hydroxyphenol)ethanes.

In some implementations, the starter used to prepare the macromer has a functionality of from 3 to 6 and a hydroxyl number of from 25 to 40 mg KOH/g, and is prepared by reacting a starter such as glycerin, trimethylolpropane, pentaerythritol, dipentaerythritol, sorbitol, mannitol, or a mixture of any two or more thereof, with an alkylene oxide comprising at least one of propylene oxide and/or ethylene oxide. In some of these embodiments, ethylene oxide is utilized in an amount of 1 to 40% by weight, such as 5 to 30% by weight or 10 to 25% by weight, based on the total weight of the starter compound. In some embodiments, all or a portion of the ethylene oxide is added as a cap on the end of the starter compound. Suitable amounts of ethylene oxide to be added as a cap range from, for example, 1 to 40% by weight, such as 3 to 30% by weight or 5 to 25% by weight, based on the total weight of starter.

As indicated earlier, in some implementations, the reaction mixture used to produce the macromer utilized to produce the pre-formed stabilizer also comprises a hydroxyl-reactive compound that contains reactive unsaturation. Suitable such compounds include, for example, methyl methacrylate, ethyl methacrylate, maleic anhydride, isopropenyl dimethyl benzyl isocyanate, 2-isocyanatoethyl methacrylate, adducts of isophorone diisocyanate and 2-hydroxyethyl methacrylate, and adducts of toluenediisocyanate and 2-hydroxypropyl acrylate, among others, including mixtures of any two or more thereof.

As also indicated earlier, in some implementations, the reaction mixture used to produce the macromer utilized to produce the pre-formed stabilizer may also comprise a diisocyanate. Suitable diisocyanates include various isomers of diphenylmethane diisocyanate and isomeric mixtures of diphenylmethane diisocyanate, such as, for example, mixtures of 2,4'-diphenylmethane diisocyanate, 4,4'-diphenylmethane diisocyanate and/or 2,2'-diphenyl-methane diisocyanate. Other suitable isocyanates include toluenediisocyanate, isophoronediisocyanate, hexamethylenediisocyanate, and 4,4'-methylenebis(cyclohexyl isocyanate), among others, includes mixtures of any two or more thereof.

In certain implementations, the macromer is used in an amount of 10 to 40% by weight, such as 15 to 35% by weight, based on the total weight of the reaction mixture used to produce the pre-formed stabilizer.

As previously mentioned, in some implementations, the reaction mixture used to form the pre-formed stabilizer used to produce the polymer polyol composition also comprises an ethylenically unsaturated compound. In addition to, or in lieu of, the ethylenically unsaturated compound described above that is the reaction product of an amine-reactive ethylenically unsaturated compound and an amino diphenylamine, suitable such ethylenically unsaturated compounds are aliphatic conjugated dienes, such as butadiene and isoprene, monovinylidene aromatic monomers such as styrene, α-methylstyrene, (t-butyl)styrene, chlorostyrene, cyanostyrene and bromostyrene, α,β-ethylenically unsaturated carboxylic acids and esters thereof, such as acrylic acid, methacrylic acid, methyl methacrylate, ethyl acrylate, 2-hydroxyethyl acrylate, butyl acrylate, itaconic acid, maleic anhydride and the like, α,β-ethylenically unsaturated nitriles and amides, such as acrylonitrile, methacrylonitrile, acrylamide, methacrylamide, N,N-dimethyl acrylamide, N-dimethylaminomethyl)acryl-amide and the like, vinyl esters, such as vinyl acetate; vinyl ethers, vinyl ketones, vinyl and vinylidene halides, as well as a wide variety of other ethylenically unsaturated materials which are copolymerizable with the macromer, including mixture of any two or more thereof.

In some implementations, the reaction mixture used to form the pre-formed stabilizer used to produce the polymer polyol composition comprises an ethylenically unsaturated compound comprising a mixture of acrylonitrile and at least one other ethylenically unsaturated comonomer which is copolymerizable with acrylonitrile, such as, for example, styrene and its derivatives, acrylates, methacrylates, such as methyl methacrylate, vinylidene chloride, among others, as well as mixtures of any two or more thereof. When using acrylonitrile with a comonomer, it is sometimes desirable that a minimum of 5 to 15% by weight acrylonitrile be maintained in the system. One specific ethylenically unsaturated compound mixture suitable for making the preformed stabilizer comprises mixtures of acrylonitrile and styrene in which, for example, acrylonitrile is used in an amount of 20 to 80% by weight, such as 30 to 70% by weight, based on the total weight of the monomer mixture, and styrene is used in an amount of 80 to 20% by weight, such as 70 to 30% by weight percent, based on the total weight of the monomer mixture.

In certain implementations, the ethylenically unsaturated compound is used in an amount of 10 to 30% by weight, such as 15 to 25% by weight, based on the total weight of the reaction mixture used to produce the pre-formed stabilizer.

The reaction mixture used to produce the pre-formed stabilizer, in certain implementations, also include a free radical initiator. Exemplary suitable free-radical initiators include peroxides, including both alkyl and aryl hydro-peroxides, persulfates, perborates, percarbonates, and azo compounds. Some specific examples include hydrogen peroxide, di(t-butyl)-peroxide, t-butylperoxy diethyl acetate, t-butyl peroctoate, t-butyl peroxy isobutyrate, t-butyl peroxy 3,5,5-trimethyl hexanoate, t-butyl perbenzoate, t-butyl peroxy pivalate, t-amyl peroxy pivalate, t-butyl peroxy-2-ethyl hexanoate, lauroyl peroxide, cumene hydroperoxide, t-butyl hydroperoxide, azobis(isobutyronitrile), and 2,2'-azo bis-(2-methylbutyronitrile). In some cases, the catalyst selected is one having a half-life that is 25 percent or less of the residence time in the reactor at a given temperature. Representative examples of useful initiators species include t-butyl peroxy-2-ethyl-hexanoate, t-butylperpivalate, t-amyl peroctoate, 2,5-dimethylhexane-2,5-di-per-2-ethyl hexoate, t-butylperneodecanoate, and t-butylperbenzoate, as well as azo compounds, such as azobis-isobutyronitrile, 2,2'-azo bis-(2-methylbutyro-nitrile), and mixtures thereof.

In some implementations, the free radical initiator is used in an amount of 0.01 to 2% by weight, such as 0.05 to 1% by weight or 0.05 to 0.3% by weight, based on the total weight of the reaction mixture used to produce the pre-formed stabilizer.

The reaction mixture used to produce the pre-formed stabilizer, in certain implementations, also includes a polymer control agent. Suitable polymer control agents include various mono-ols (i.e. monohydroxy alcohols), aromatic hydrocarbons, and ethers. Specific examples of suitable polymer control agents are alcohols containing at least one carbon atom, such as methanol, ethanol, n-propanol, isopropanol, n-butanol, sec.-butanol, t-butanol, n-pentanol, 2-pentanol, 3-pentanol, and the like, and mixtures of any two or more thereof. Other suitable polymer control agents include ethylbenzene and toluene. The polymer control agent can be used in substantially pure form (i.e. as commercially available) or can be recovered in crude form from the polymer polyol production process and reused as-is. For instance, if the polymer control agent is isopropanol, it can be recovered from the polymer polyol process and used at any point in a subsequent product campaign in which the isopropanol is present.

In certain implementations, the polymer control agent is used in an amount of 30 to 80% by weight, such as 40 to 70% by weight, based on the total weight of the reaction mixture used to produce the pre-formed stabilizer.

As previously indicated, the reaction mixture used to produce the pre-formed stabilizer, in certain implementations, may also include a chain transfer agent. Suitable chain transfer agents include alkylene oxide adducts having a hydroxyl functionality of greater 3. In some implementations, the chain transfer agent is the same as or equivalent to the polyol used in the formation of precursor used to prepare the preformed stabilizer. In certain implementations, the chain transfer agent is used in an amount of 0 to 40% by weight, such as 0 to 20% by weight, or, in some cases, 0 to 10% by weight, based on the total weight of the reaction mixture used to produce the pre-formed stabilizer.

The preformed stabilizer can be produced by a process similar to that of making the polymer polyol. The temperature range is not critical and may vary from, for example, 80°C to 150°C, such as 115°C to 125°C. The mixing conditions employed can, for example, be those obtained using a back mixed reactor (e.g.--a stirred flask or stirred autoclave).

As indicated earlier, the reaction mixture used to produce certain implementations of the polymer polyol composition, particular those in which the polymer particles comprise a vinylic polymer, also comprises a free radical initiator. Suitable such free-radical initiators include, for example, any of those described previously with respect to the production of the preformed stabilizer. In certain implementations, the free-radical initiator is present in the reaction mixture used to produce the polymer polyol composition in an amount of 0.01 to 2% by weight, based on 100% by weight of the final polymer polyol composition.

In some implementations, the reaction mixture used in preparing the polymer polyol composition further comprises a chain transfer agent. Examples of suitable chain transfer agents are mercaptans, such as dodecane thiol, ethane thiol, octane thiol, and toluene thiol, halogenated hydrocarbons, such as carbon tetrachloride, carbon tetrabromide, and chloroform, amines, such as diethylamine, and enol-ethers. In some embodiments, if used, the chain transfer agent is used in an amount of 0.1 to 2% by weight, such as 0.2 to 1% by weight, based on the total weight of the reaction mixture used to produce the polymer polyol.

The foregoing polymer polyol compositions can be made using any process (including continuous and semi-batch) and reactor configuration that is known to be suitable to prepare polymer polyols, such as, for example, a two-stage reaction system comprising a continuously-stirred tank reactor (CSTR) fitted with impeller(s) and baffles (first-stage) and a plug-flow reactor (second stage). Furthermore, the reaction system can utilize a wide range of mixing conditions. The reaction system may be characterized by energy inputs of from 98.50 to 68947.58 m⁻¹ kg s⁻³ (0.5 to 350 horsepower per 1000 gallons), such as 393.99 to 9849.65 m⁻¹ kg s⁻³ (2 to 50 horsepower per 1000 gallons) on average for the bulk phase volume of each reactor as a particularly useful mixing power input. Mixing can be provided by any combination of impeller(s) and pump-around loop/jet mixing. In addition, such polymer polyols compositions can be prepared from various types and combinations of axially and/or radially/tangentially acting impellers including, but not limited to, 4-pitched-blade, 6-pitched-blade, 4-flat-blade, 6-flat-blade, pitched-blade turbine, flat-blade turbine, Rushton, Maxflow, propeller, etc. For a continuous production process to prepare polymer polyols, a residence time ranging of 20 to 180 minutes for the first reactor may be particularly useful.

In some implementations, the reactants are pumped from feed tanks through an in-line static mixer, and then, through a feed tube into the reactor. It may be particularly useful to prepare a premix of the initiator with part of the polyol stream, as well as of polyol and stabilizer. In general, feed stream temperatures are ambient (i.e. 25°C). However, if desired, feed streams can be heated prior to mixing and entering the reactor. Other process conditions, which may be useful, include cooling of the feed tube in the reactor. Furthermore, the suitable reaction conditions for polymer polyols in general may be characterized by a reaction temperature in the range of 80 to 200°C and a pressure in the range of 2.39 to 6.53 bar (20 to 80 psig). Typically, the product can then treated in a single or multi staged stripping step to remove volatiles before entering a stage, which can essentially be any combination of filtration and/or product cooling.

In many cases, the polymer polyol compositions are produced by utilizing a low monomer to polyol ratio which is maintained throughout the reaction mixture during the process. This can be achieved by employing conditions that provide rapid conversion of monomer to polymer. In practice, a low monomer to polyol ratio is maintained, in the case of semi-batch and continuous operation, by control of the temperature and mixing conditions and, in the case of semibatch operation, also by slowly adding the monomers to the polyol. The temperature range is not critical and may vary from, for example, 80°C to 200°C, 100°C to 140°C, or, in some cases, 115°C to 125°C.

One suitable continuous process for making polymer polyol compositions as described above comprises (1) providing a heterogenous mixture of the preformed stabilizer and, optionally, liquid diluent, in combination with a polyol, a free radically polymerizable ethylenically unsaturated compound, and a free radical polymerization initiator, (2) in a reaction zone maintained at a temperature sufficient to initiate a free radical reaction, and under sufficient pressure to maintain only liquid phases in the reaction zone, for a period of time sufficient to react at least a major portion of the ethylenically unsaturated compound to form a heterogenous mixture containing the enhanced polymer polyol, unreacted compounds and diluent, and stripping the unreacted compounds and diluent from the enhanced polymer polyol to recover the unreacted compounds and diluent.

In some implementations, the polymer particles (whether individual particles or agglomerates of individual particles) are relatively small in size and, in some cases, have a weight average diameter less than ten microns.

Following polymerization, volatile constituents, in particular those from the PCA and residues of monomers are generally stripped from the product by, for example, vacuum distillation, such as in a thin layer of a falling film evaporator. The monomer-free product may be used as is, or may be filtered to remove any large particles that may have been created. In some cases, all of the product will pass through the filter employed in the 150 mesh filtration hindrance test.

Certain embodiments of this specification are directed to polyurethane foams produced using the polymer polyol compositions described above, as well to methods of manufacturing such polyurethane foam. As will be appreciated, polyurethane foams can be produced by reacting a reaction mixture comprising: (1) a polyisocyanate component and (2) a polyol composition. The polyol composition may comprise any of the polymer polyol compositions described above. In addition, the isocyanate-reactive component may include: (i) other polyols, such as a polyether polyol having a functionality of from 2 to 6, an OH number of from 18 to 238, and a number average molecular weight of from 160 to 8000, (ii) a blowing agent, (iii) a catalyst, (iv) a surfactant, and/or (v) an antioxidant.

Suitable blowing agents include halogenated hydrocarbons, halogenated olefins, water, liquid carbon dioxide, low boiling solvents such as, for example, pentane, and other known blowing agents. In some embodiments, the blowing agent comprises, or consists of, water. In certain implementations, blowing agent is used in an amount of 1 to 7 parts, such as 1 to 5 parts, by weight, based on the total weight of the isocyanate-reactive component.

Suitable catalysts include amine and tin based catalysts, such as diethylenetriamine, triethylenediamine, bis(2,2'-di-methylamino)ethyl ether, N,N,N',N",N"-pentamethyldiethylenetriamine, dibutyltin dilaurate, dibutyltin diacetate, and stannous octoate, and the like. In certain implementations, catalyst is used in an amount of 0.001 to 2 parts by weight, based on the total weight of the isocyanate-reactive component.

In addition, the isocyanate-reactive component may, if desired, include a low molecular weight chain extender and/or cross-linking agent which has a molecular weight of, for example, below 300 Da. Examples include, but are not limited to, glycerine, pentaerythritol, ethylene glycol, sorbitol, and alkanolamines, such as monoethanolamine, diethanolamine (DEOA) and triethanolamine (TEOA). In certain implementations, such chain extender and/or cross-linking agent is used in an amount of up to 5 parts per by weight, such as 0.4 to 3.5 parts by weight, based on the total weight of the isocyanate-reactive component.

Suitable surfactants include, but are not limited to, commercially available polyetherpolysiloxane foam stabilizers.

In addition, the polyol compositions may also comprise other antioxidants. For example, in some implementations, the polymer polyol composition may further comprise an amine of the structure: 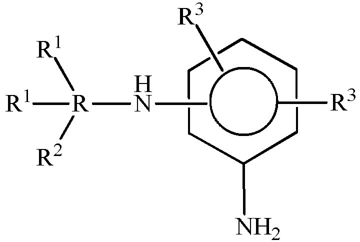 in which R is an aryl radical, each R¹ is independently hydrogen, a C₁-C₄ alkyl radical, or a C₁-C₄ alkoxy radical, R₂ is hydrogen or a C₁-C₄ alkyl radical, and each R³ is independently hydrogen, a C₁-C₄ alkyl radical, a C₁-C₄ alkoxy radical, or a radical of the formula: 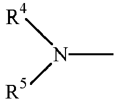 in which R⁴ is a C₁-C₁₂ alkyl radical, a C₅-C₁₂ cycloalkyl radical, a C₆-C₁₂ aryl radical, or a C₇-C₁₃ aralkyl radical, and R⁵ is hydrogen or a C₁-C₁₂ alkyl radical.

Specific examples of such amines include, but are not limited to, any of the isomers of aminodiphenylamine, such as 4-aminodiphenylamine, 3-aminodiphenylamine, and 2-aminodiphenylamine, 4-amino-4'-methyl diphenylamine, 4-amino-4'-methoxy diphenylamine, 4-amino-4'-ethoxy diphenylamine, 4-amino-4'-(N,N-dimethylamine) diphenylamine, and 4-amino-4'-isopropyl diphenylamine.

In certain implementations, the foregoing amine is used in an amount of 100 to 2000 ppm, such as 200 to 1500 ppm, based on the total weight of the polymer polyol composition.

In addition, a phenolic antioxidant may be present. For example, in some implementations, the phenolic antioxidant may include one or more of the following compounds: 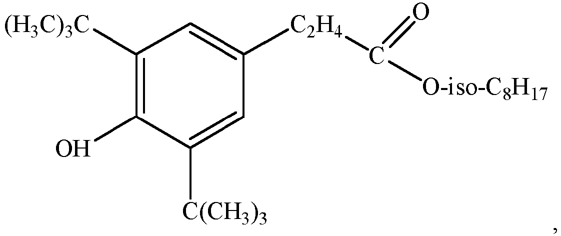 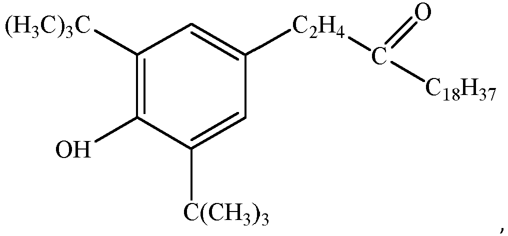 and

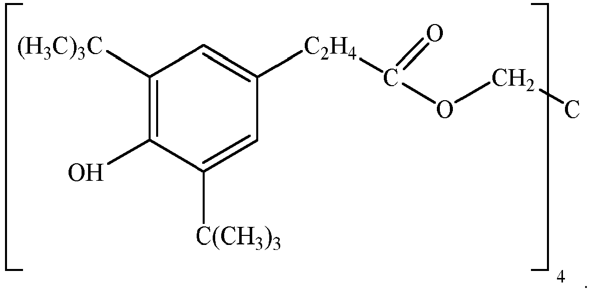

The polyurethane foam can be prepared by reacting the polyisocyanate component with the isocyanate-reactive component, wherein the polyisocyanate component is present in an amount sufficient to, for example, provide an isocyanate index of 70 to 130, such as 80 to 120 or 90 to 115.

The preparation of free rise foams typically entails mixing all components (except for the isocyanate components) together, then adding the isocyanate component to the mixture and briefly mixing. The mixture is then poured into a box and allowed to rise freely. Settling of the foam is measured, and it is oven cured at, for example, 125°C for 5 minutes. After 16 hours at room temperature, shrinkage is noted and the foam properties can then be determined by various tests.

The preparation of molded foams typically involves pre-mixing the polyol components along with additives. The isocyanate component is then added to the pre-mix in a sufficient amount to the desired isocyanate index. The reaction mixture is then dispensed by hand or machine into a metal mold which is typically preheated to a temperature of 62 to 66°C. The reaction mixture foams to fill the mold and, after 4 to 5 minutes, the foam is removed from the mold and (physically) crushed to ensure that all cells were opened; and then aged for 2 hours.

The non-limiting and non-exhaustive examples that follow are intended to further describe various non-limiting and non-exhaustive implementations without restricting the scope of the implementations described in this specification.

### EXAMPLES

The following components were used in the examples.
Polyol 1: A propylene oxide adduct of sorbitol containing 12% ethylene oxide as a cap with a hydroxyl number of 33.
Polyol 2: A propylene oxide adduct of glycerine containing a 20% ethylene oxide cap with a hydroxyl number of 36 and having a viscosity of 833 mPa.s.
Polyol 3: A glycerin/sorbitol started polyether polyol containing about 81 to 82% of propylene oxide and about 17 to 18% of ethylene oxide, having an OH number of about 31.5 and a viscosity of 1100 mPa.s.
PCA: Isopropanol, a polymer control agent.
MDI: Monomeric diphenylmethane diisocyanate (MDI) containing a high 2,4'-isomer content, available as Mondur^{®} MLQ from Covestro LLC.
TMI: Isopropenyl dimethyl benzyl isocyanate (an unsaturated aliphatic isocyanate) sold as TMI^{®} by Allnex.
TDI: Toluene diisocyanate comprising 80% by weight of the 2,4-isomer and 20% by weight of the 2,6- isomer, and having an NCO group content of 48.3%.
PPD: N-Phenyl-p-phenylenediamine, obtained from SigmaAldrich.
Initiator A: tertiary-Butylperoxy-2-ethylhexanoate available as TBPEH from United initiators.
Initiator B: tertiary-Amyl peroxypivalate, a free-radical polymerization initiator commercially available as Trigonox 125-C75 from Nouryon.
Initiator C: 1,1-di(tert-amylperoxy)cyclohexane, a free-radical polymerization initiator, commercially available as Trigonox 122-C80 from Nouryon.
DEOA-LF: Diethanolamine, a commercially available foam crosslinker/foam modifier that is commercially available from Air Products.
Catalyst A: Bismuth neodecanoate, commercially available under the name CosCat 83 from Vertellus.
Catalyst B: 70% by weight bis[2-dimethylaminoethyl]ether in 30% dipropylene glycol, an amine catalyst, commercially available from Momentive Performance Materials as NIAX A-1. Catalyst C: 33% by weight diazabicyclooctane in 67% by weight dipropylene glycol, an amine catalyst, commercially available from Momentive Performance Materials as NIAX A-33. Surfactant A: a silicon surfactant commercially available as DC5043 from Air Products.

### Test Methods

Viscosity: Dynamic viscosities reported in mPa.s and measured on an Anton-Paar SVM 3000 viscometer at 25 °C that has been demonstrated to give equivalent results as can be generated with ASTM-D4878-15. The instrument was calibrated using mineral oil reference standards of known viscosity.

Filtration: Filterability was determined by diluting one part by weight sample (e.g. 200 grams) of polymer polyol with two parts by weight anhydrous isopropanol (e.g. 400 grams) to remove any viscosity-imposed limitations and using a fixed quantity of material relative to a fixed cross-sectional area of screen (e.g. 1 1/8 in. diameter), such that all of the polymer polyol and isopropanol solutions passes by gravity through a 700-mesh screen. The 700-mesh screen is made with a Dutch twill weave. The actual screen used had a nominal opening of 30 microns. The amount of sample which passed through the screen within 600 seconds was reported in percent, and a value of 100 percent indicates that over 99 weight percent passed through the screen.

### MACROMER PREPARATION:

Macromer A: Polyol 1 (2783g), TMI (16.9g), and MDI (5.6g) were added to a 12L flask and stirred at 75 °C for 2 hours. Catalyst A (100ppm) was added and the reaction mixture was stirred an additional 2 hours at 75 °C.

### MODIFIED AMINE PREPARATION:

Amine A: PPD (100g), 1,4-benzoquinone (0.03g), and 50 mL of toluene were added to a 500 mL flask with stirring until the diamine had dissolved. Glycidyl methacrylate (77g) was added at 85 °C and the mixture stirred at 90 °C for 3 hours. After solvent evaporation, the amine product was obtained as a brown solid.

Amine B: PPD (100g), 1,4-benzoquinone (0.03g), and 100 mL of toluene were added to a 1L flask with stirring until the diamine had dissolved. The solution was heated to 50 °C, and TMI (109.4g) was added, keeping the temperature <85 °C. The mixture was stirred at 75 °C for 2 hours. After solvent evaporation, the amine product was obtained as a brown solid.

### PREFORMED STABILIZER (PFS) PREPARATION:

The pre-formed stabilizer was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously to the reactor from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 5.49 bar (65 psig). The product, i.e. the pre-formed stabilizer, then passed through a cooler and into a collection vessel. The preformed stabilizer formulation is disclosed in Table 1.

**Table 1**

| **Component** | **PFS** |
|---|---|
| PCA, wt. % | 60.0% |
| Macromer A, wt. % | 24.0% |
| Monomer, wt. % | 15.9% |
| Styrene/acrylonitrile ratio | 50:50 |
| Initiator A, wt. % | 0.1% |

### POLYMER POLYOL PREPARATION

Table 2 relates to the preparation of the polymer polyol of the present specification. The polymer polyol was prepared in a two-stage reaction system comprising a continuously-stirred tank reactor (CSTR) fitted with an impeller and 4 baffles (first-stage) and a plug-flow reactor (second stage). The residence time in each reactor was about 60 minutes. The reactants were pumped continuously from feed tanks through an in-line static mixer and then through a feed tube into the reactor, which was well mixed. The temperature of the reaction mixture was controlled at 120 ± 5°C. The product from the second-stage reactor overflowed continuously through a pressure regulator designed to control the pressure in each stage at 4.12 bar (45 psig). The product, i.e. the polymer polyol, then passed through a cooler and into a collection vessel. The crude product was vacuum stripped to remove volatiles. The wt. % total polymer in the product was calculated from the concentrations of residual monomers measured in the crude polymer polyol before stripping.

**Table 2**

| | **Comp Example 1** | **Example 1** | **Example 2** |
|---|---|---|---|
| Polyol | 2 | 2 | 2 |
| Polyol (wt.% in feed) | 49.41 | 54.18 | 49.41 |
| PFS (wt.% in feed) | 8.33 | 8.33 | 8.33 |
| Styrene (wt.% in feed) | 26.62 | 23.12 | 26.06 |
| Acrylonitrile (wt.% in feed) | 15.38 | 13.34 | 15.07 |
| Amine, (wt% in feed) | 0 | A, 0.77 | B, 0.86 |
| Initiator B (wt. % in feed) | 0.25 | 0.25 | 0.25 |
| Initiator C (wt. % in feed) | 0.01 | 0.01 | 0.01 |
| Total Polymer (wt.%) | 45.0 | 40.3 | 44.2 |
| Viscosity mPa.s @ 25°C | 6027 | 4459 | 5629 |
| Filterability, (seconds) | 338 | 302 | 217 |

### Polyol spiking VOC studies

PMPO Examples 1, 2, and Comparative Example 1 were submitted for VOC testing via method USP-467 Residual Solvents. PMPO Example 1 exhibited a 100% reduction in formaldehyde emissions relative to Comparative Example 1 and PMPO Example 2 exhibited a 99.9% reduction in formaldehyde emissions relative to Comparative Example 1. PMPO Example 1 exhibited a 99.8% reduction in acetaldehyde emissions relative to Comparative Example 1 and PMPO Example 2 exhibited a 99.8% reduction in acetaldehyde emissions relative to Comparative Example 1.

Although not specifically tested, the detection limit for PPD in foams is expected to be below the VDA 278 detection limit for toluene equivalents (< 20 ng) for VOC and hexadecane (<20 ng) equivalents for FOG.

### Foam VOC studies

Foam formulations were prepared using the components and amounts listed in Table 3. The foams in Table 3 were prepared by mixing, the surfactant, water, catalysts, and diethanolamine in a flask to create a master blend. Then, the desired amount of polyether polyol and polymer polyol was added to a cup containing the desired amount of master blend. The contents of the cup were mixed for 55 seconds. An amount of Isocyanate component necessary to give an isocyanate index of 100 was added to the cup containing the master blend and polyol/polymer polyol mixture. The contents of the cup were mixed together for 5 seconds, and the reacting mixture was quickly poured into a 68.3 °C (155°F) water-jacketed mold. After 4 minutes, the foam was removed from the mold, run through a cell-opening crushing device, and then wrapped and packaged per CertiPUR-US^{®} technical guidelines. After 24 hours of aging in a controlled temperature and humidity laboratory, the foams were submitted for emissions testing. The PPD emissions and the percent reduction of aldehydic emissions relative to the control are set forth in Table 4.

**Table 3**

| | **Foam 1** | **Foam 2** | **Foam 3** |
|---|---|---|---|
| PMPO type | Comp Example 1 | Example 1 | Example 2 |
| Polyol 3, pphp | 55.00 | 55.00 | 55.00 |
| PMPO, pphp | 45.00 | 45.00 | 45.00 |
| Water, pphp | 2.15 | 2.15 | 2.15 |
| DEOA-LF, pphp | 1.25 | 1.25 | 1.25 |
| Surfactant A, pphp | 1.00 | 1.00 | 1.00 |
| Catalyst C, pphp | 0.32 | 0.32 | 0.32 |
| Catalyst B, pphp | 0.08 | 0.08 | 0.08 |
| TDI/MDI, pphp | 31.86 | 31.92 | 31.92 |
| Reduced Formaldehyde Emissions (%)^{a} | | 15 | 49 |
| Reduced Acetaldehyde Emissions (%)^{a} | | 23 | 53 |
| PPD Emissions (%)^{b} | | None detected | None detected |

| | | | |
|---|---|---|---|
| a. Tested via 7.4.2 of EPA Method 8315A modified by using LC/MS/MS detection b. Tested via VDA 278 | | | |

Moreover, although not specifically tested, it is expected that foam properties would not be significantly affected by the inclusion of Polyol 3 in the amounts contemplated.

## Claims

1. A polymer polyol composition comprising polymer particles dispersed in a base polyol that has a functionality of 2 to 8 and an OH number of 20 to 400 mg KOH/g, wherein the polymer particles comprise the reaction product of a reaction mixture comprising:
(1) an ethylenically unsaturated compound;
(2) a preformed stabilizer comprising the reaction product of a reaction mixture comprising:
(a) an ethylenically unsaturated macromer;
(b) an ethylenically unsaturated compound comprising the reaction product of a reaction mixture comprising:
(i) a starter having a functionality of 2 to 8 and a hydroxyl number of 20 to 50 mg KOH/g; and
(ii) an ethylenically unsaturated hydroxyl-reactive compound; and (c) a free radical initiator, and
(3) a free radical initiator,
wherein the polymer particles comprise units derived from an ethylenically unsaturated compound of structure (I): 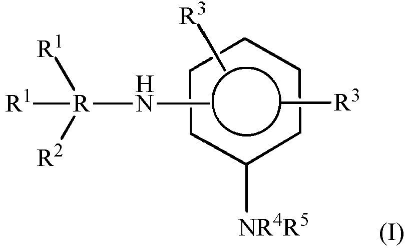
in which R is an aryl radical, each R¹ is independently hydrogen, a C₁-C₄ alkyl radical, or a C₁-C₄ alkoxy radical, R₂ is hydrogen or a C₁-C₄ alkyl radical, each R³ is independently hydrogen, a C₁-C₄ alkyl radical, a C₁-C₄ alkoxy radical, or a radical of the formula: 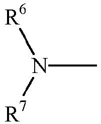
in which R⁶ is a C₁-C₁₂ alkyl radical, a C₅-C₁₂ cycloalkyl radical, a C₆-C₁₂ aryl radical, or a C₇-C₁₃ aralkyl radical, and R⁷ is hydrogen or a C₁-C₁₂ alkyl radical, and R⁴ and R⁵ are each independently hydrogen or an ethylenically unsaturated moiety derived from an amine-reactive ethylenically unsaturated compound, with the proviso that at least one of R⁴ and R⁵ is an ethylenically unsaturated moiety derived from an amine-reactive ethylenically unsaturated compound.

2. The polymer polyol composition of claim 1, wherein the ethylenically unsaturated compound of structure (I) is the reaction product of a reaction mixture comprising (a) an amine-reactive ethylenically unsaturated compound, and (b) an amino diphenylamine comprising an isomer of aminodiphenylamine, such as 4-aminodiphenylamine, 3-aminodiphenylamine, and 2-aminodiphenylamine, 4-amino-4'-methyl diphenylamine, 4-amino-4'-methoxy diphenylamine, 4-amino-4'-ethoxy diphenylamine, 4-amino-4'-(N,N-dimethylamine) diphenylamine, or 4-amino-4'-isopropyl diphenylamine.

3. The polymer polyol composition of claim 2, wherein the amine-reactive ethylenically unsaturated compound comprises an ethylenically unsaturated compound that contains acid, acid anhydride, oxirane, and/or isocyanate functionality.

4. The polymer polyol composition of claim 1 to claim 3, wherein the base polyol has a functionality of 2 to 6 or 3 to 6, and/or an OH number of 20 to 200 mg KOH/g, 20 to 150 mg KOH/g, 20 to 100 mg KOH/g, 20 to 50 mg KOH/g, 25 to 50 mg KOH/g, or 30 to 50 mg KOH/g.

5. The polymer polyol composition of one of claim 1 to claim 4, wherein the ethylenically unsaturated compound (1) used in the reaction mixture to produce the polymer polyol comprises styrene and acrylonitrile where the weight ratio of styrene to acrylonitrile (S:AN) is within the range of 80:20 to 20:80 or 75:25 to 25:75.

6. The polymer polyol composition of one of claim 1 to claim 5, wherein the ethylenically unsaturated compound of structure (I) is present in an amount of 0.1 wt% to 20 wt%, based on the total weight of ethylenically unsaturated compound used to prepare the polymer polyol composition.

7. The polymer polyol composition of one of claim 1 to claim 6, wherein the pre-formed stabilizer comprises the reaction product of a reaction mixture comprising: (a) a macromer that contains reactive unsaturation, (b) an ethylenically unsaturated compound, (c) a free radical initiator, (d) a polymer control agent; and, optionally, (e) a chain transfer agent.

8. A polyurethane foam comprising the reaction product of a reaction mixture comprising: (1) a polyisocyanate component and (2) a polyol composition comprising the polymer polyol composition of one of claim 1 to claim 7.

9. The polyurethane foam of claim 8, wherein the reaction mixture further comprises an amine of the structure (II): 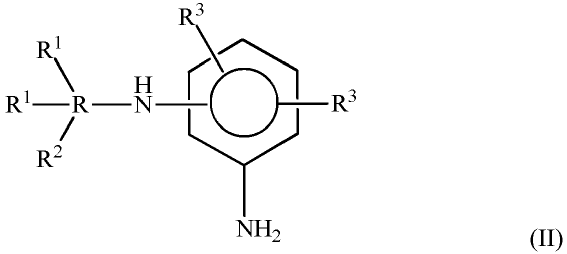
in which R is an aryl radical, each R¹ is independently hydrogen, a C₁-C₄ alkyl radical, or a C₁-C₄ alkoxy radical, R₂ is hydrogen or a C₁-C₄ alkyl radical, and R³ is hydrogen, a C₁-C₄ alkyl radical, a C₁-C₄ alkoxy radical, or a radical of the formula: 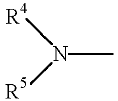
in which R⁴ is a C₁-C₁₂ alkyl radical, a C₅-C₁₂ cycloalkyl radical, a C₆-C₁₂ aryl radical, or a C₇-C₁₃ aralkyl radical, and R⁵ is hydrogen or a C₁-C₁₂ alkyl radical, such as 4-aminodiphenylamine, 3-aminodiphenylamine, 2-aminodiphenylamine, 4-amino-4'-methyl diphenylamine, 4-amino-4'-methoxy diphenylamine, 4-amino-4'-ethoxy diphenylamine, 4-amino-4'-(N,N-dimethylamine) diphenylamine, and/or 4-amino-4'-isopropyl diphenylamine.

10. The polyurethane foam of claim 9, wherein the amine of structure (II) is present in an amount of 100 to 2000 ppm or 200 to 1500 ppm, based on the total weight of the polymer polyol composition.

11. The polyurethane foam of one of claim 8 to claim 10, wherein the reaction mixture further comprises a phenolic antioxidant comprising: 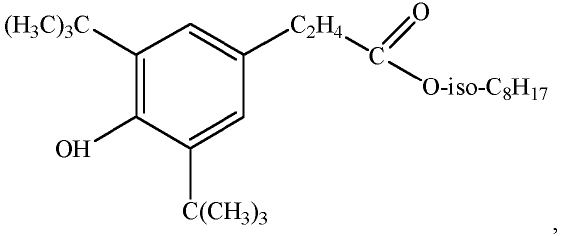 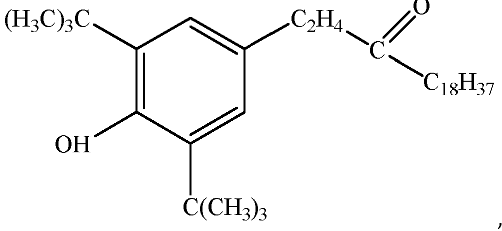 and/or

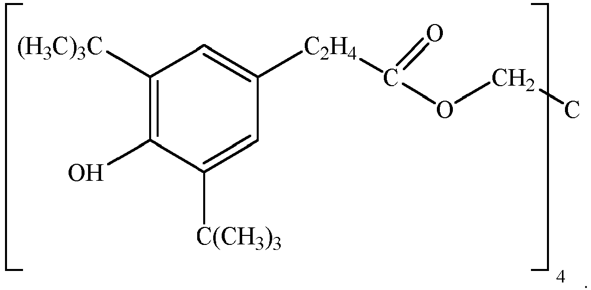

12. A method for making the polyurethane foam of one of claim 8 to claim 11, comprising reacting the polyisocyanate component with one or more polyols at an isocyanate index of 70 to 130, 80 to 120, or 90 to 115.

## Patentansprüche

1. Polymerpolyolzusammensetzung umfassend Polymerpartikel, die in einem Grundpolyol dispergiert sind, das eine Funktionalität von 2 bis 8 und eine OH-Zahl von 20 bis 400 mg KOH/g aufweist, wobei die Polymerpartikel das Reaktionsprodukt eines Reaktionsgemischs umfassen, das umfasst:
(1) eine ethylenisch ungesättigte Verbindung;
(2) einen vorgebildeten Stabilisator, der das Reaktionsprodukt eines Reaktionsgemischs umfasst, das umfasst:
(a) ein ethylenisch ungesättigtes Makromer;
(b) eine ethylenisch ungesättigte Verbindung, die das Reaktionsprodukt eines Reaktionsgemischs umfasst, das umfasst:
(i) einen Starter mit einer Funktionalität von 2 bis 8 und einer Hydroxyzahl von 20 bis 50 mg KOH/g; und
(ii) eine ethylenisch ungesättigte hydroxyreaktive Verbindung; und (c) einen Radikalinitiator, und
(3) einen Radikalinitiator,
wobei die Polymerpartikel Einheiten umfassen, die von einer ethylenisch ungesättigten Verbindung der Struktur (I) abgeleitet sind: 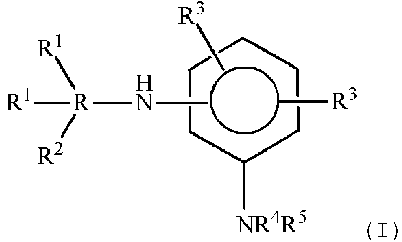
wobei R ein Arylrest ist, jedes R¹ unabhängig Wasserstoff, ein C₁-C₄-Alkylrest oder ein C₁-C₄-Alkoxyrest ist, R₂ Wasserstoff oder ein C₁-C₄-Alkylrest ist, jedes R³ unabhängig Wasserstoff, ein C₁-C₄-Alkylrest, ein C₁-C₄-Alkoxyrest oder ein Rest der Formel ist: 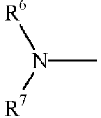
wobei R⁶ ein C₁-C₁₂-Alkylrest, ein C₅-C₁₂-Cycloalkylrest, ein C₆-C₁₂-Arylrest oder ein C₇-C₁₃-Aralkylrest ist und R⁷ Wasserstoff oder ein C₁-C₁₂-Alkylrest ist und R⁴ und R⁵ jeweils unabhängig Wasserstoff oder eine ethylenisch ungesättigte Einheit sind, die von einer aminreaktiven ethylenisch ungesättigten Verbindung abgeleitet ist, mit der Maßgabe, dass wenigstens eines von R⁴ und R⁵ eine ethylenisch ungesättigte Einheit abgeleitet von einer aminreaktiven ethylenisch ungesättigten Verbindung ist.

2. Polymerpolyolzusammensetzung nach Anspruch 1, wobei die ethylenisch ungesättigte Verbindung der Struktur (I) das Reaktionsprodukt eines Reaktionsgemischs ist, das (a) eine aminreaktive ethylenisch ungesättigte Verbindung und (b) ein Aminodiphenylamin umfassend ein Isomer von Aminodiphenylamin, wie z. B. 4-Aminodiphenylamin, 3-Aminodiphenylamin und 2-Aminodiphenylamin, 4-Amino-4'-methyldiphenylamin, 4-Amino-4'-methoxydiphenylamin, 4-Amino-4'-ethoxydiphenylamin, 4-Amino-4'-(N,N-dimethylamin)diphenylamin oder 4-Amino-4'-isopropyldiphenylamin, umfasst.

3. Polymerpolyolzusammensetzung nach Anspruch 2, wobei die aminreaktive ethylenisch ungesättigte Verbindung eine ethylenisch ungesättigte Verbindung umfasst, die Säure-, Säureanhydrid-, Oxiran- und/oder Isocyanatfunktionalität umfasst.

4. Polymerpolyolzusammensetzung nach Anspruch 1 bis Anspruch 3, wobei das Grundpolyol eine Funktionalität von 2 bis 6 oder 3 bis 6 und/oder eine OH-Zahl von 20 bis 200 mg KOH/g, 20 bis 150 mg KOH/g, 20 bis 100 mg KOH/g, 20 bis 50 mg KOH/g, 25 bis 50 mg KOH/g oder 30 bis 50 mg KOH/g aufweist.

5. Polymerpolyolzusammensetzung nach einem der Ansprüche 1 bis 4, wobei die ethylenisch ungesättigte Verbindung (1), die in dem Reaktionsgemisch zur Herstellung des Polymerpolyols verwendet wird, Styrol und Acrylnitril umfasst, wobei das Gewichtsverhältnis von Styrol zu Acrylnitril (SAN) in dem Bereich von 80:20 bis 20:80 oder 75:25 bis 25:75 liegt.

6. Polymerpolyolzusammensetzung nach einem der Ansprüche 1 bis 5, wobei die ethylenisch ungesättigte Verbindung der Struktur (I) in einer Menge von 0,1 Gew.-% bis 20 Gew.-%, bezogen auf das Gesamtgewicht der ethylenisch ungesättigten Verbindung, die zur Herstellung der Polymerpolyolzusammensetzung verwendet wird, vorhanden ist.

7. Polymerpolyolzusammensetzung nach einem der Ansprüche 1 bis 6, wobei der vorgeformte Stabilisator das Reaktionsprodukt eines Reaktionsgemischs umfasst, das umfasst: (a) ein Makromer, das reaktive Unsättigung enthält, (b) eine ethylenisch ungesättigte Verbindung, (c) einen Radikalinitiator, (d) ein Polymerkontrollmittel und gegebenenfalls (e) ein Kettenübertragungsmittel.

8. Polyurethanschaum, umfassend das Reaktionsprodukt eines Reaktionsgemischs umfassend: (1) eine Polyisocyanatkomponente und (2) eine Polyolzusammensetzung umfassend die Polymerpolyolzusammensetzung nach einem der Ansprüche 1 bis 7.

9. Polyurethanschaum nach Anspruch 8, wobei das Reaktionsgemisch ferner ein Amin der Struktur (II) umfasst: 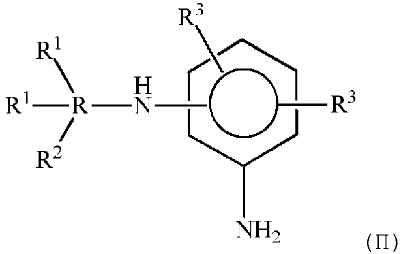
wobei R ein Arylrest ist, jedes R¹ unabhängig Wasserstoff, ein C₁-C₄-Alkylrest oder ein C₁-C₄-Alkoxyrest ist, R₂ Wasserstoff oder ein C₁-C₄-Alkylrest ist und R³ Wasserstoff, ein C₁-C₄-Alkylrest, ein C₁-C₄-Alkoxyrest oder ein Rest der Formel ist: 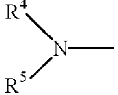
wobei R⁴ ein C₁-C₁₂-Alkylrest, ein C₅-C₁₂-Cycloalkylrest, ein C₆-C₁₂-Arylrest oder ein C₇-C₁₃-Aralkylrest ist und R⁵ Wasserstoff oder ein C₁-C₁₂-Alkylrest ist, wie z. B. 4-Aminodiphenylamin, 3-Aminodiphenylamin, 2-Aminodiphenylamin, 4-Amino-4'-methyldiphenylamin, 4-Amino-4'-methoxydiphenylamin, 4-Amino-4'-ethoxydiphenylamin, 4-Amino-4'-(N,N-dimethylamin)diphenylamin und/oder 4-Amino-4'-isopropyldiphenylamin.

10. Polyurethanschaum nach Anspruch 9, wobei das Amin der Struktur (II) in einer Menge von 100 bis 2000 ppm oder 200 bis 1500 ppm, bezogen auf das Gesamtgewicht der Polymerpolyolzusammensetzung, vorhanden ist.

11. Polyurethanschaum nach einem der Ansprüche 8 bis 10, wobei das Reaktionsgemisch ferner ein phenolisches Antioxidationsmittel umfasst, das umfasst: 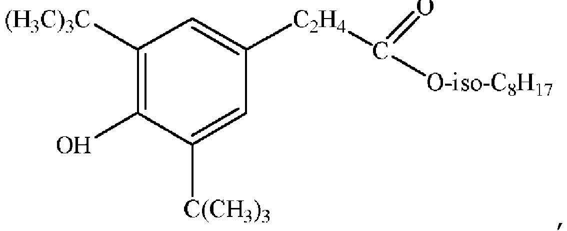 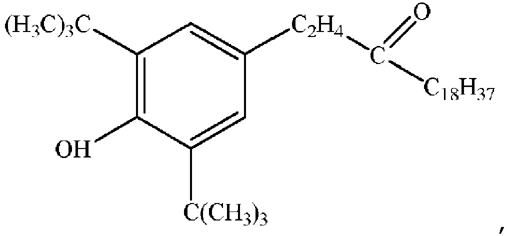 und/oder

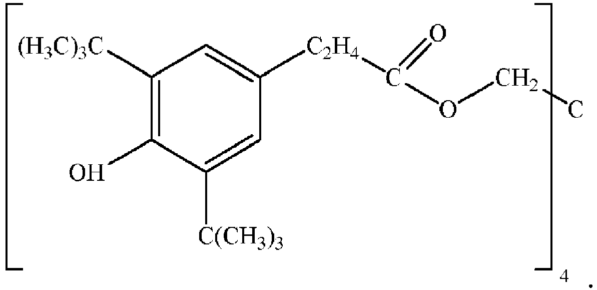

12. Verfahren zur Herstellung des Polyurethanschaums nach einem der Ansprüche 8 bis 11, umfassend Umsetzen der Polyisocyanatkomponente mit einem oder mehreren Polyolen bei einem Isocyanatindex von 70 bis 130, 80 bis 120 oder 90 bis 115.

## Revendications

1. Composition de polyol polymère comprenant des particules de polymère dispersées dans un polyol de base qui a une fonctionnalité de 2 à 8 et un indice D'OH de 20 à 400 mg de KOH/g, les particules de polymère comprenant le produit de réaction d'un mélange réactionnel comprenant :
(1) un composé éthyléniquement insaturé ;
(2) un stabilisant préformé comprenant le produit de réaction d'un mélange réactionnel comprenant :
(a) un macromère éthyléniquement insaturé ;
(b) un composé éthyléniquement insaturé comprenant le produit de réaction d'un mélange réactionnel comprenant:
(i) un démarreur ayant une fonctionnalité de 2 à 8 et un indice d'hydroxyle de 20 à 50 mg de KOH/g ; et
(ii) un composé éthyléniquement insaturé réactif envers un hydroxyle ; et (c) un initiateur de radicaux libres, et
(3) un initiateur de radicaux libres,
dans laquelle les particules de polymère comprennent des motifs issus d'un composé éthyléniquement insaturé de structure (I) : 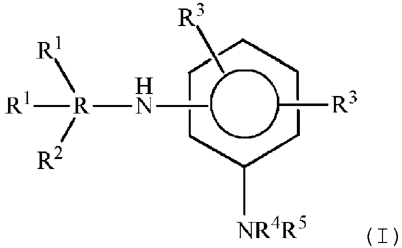
dans laquelle R est un radical aryle, chaque R¹ est indépendamment hydrogène, un radical alkyle en C₁-C₄, ou un radical alcoxy en C₁-C₄, R₂ est hydrogène ou un radical alkyle en C₁-C₄, chaque R³ est indépendamment hydrogène, un radical alkyle en C₁-C₄, un radical alcoxy en C₁-C₄, ou un radical de la formule : 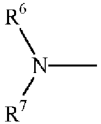
dans laquelle R⁶ est un radical alkyle en C₁-C₁₂, un radical cycloalkyle en C₅-C₁₂, un radical aryle en C₆-C₁₂, ou un radical aralkyle en C₇-C₁₃, et R⁷ est hydrogène ou un radical alkyle en C₁-C₁₂, et R⁴ et R⁵ sont chacun indépendamment hydrogène ou un groupement éthyléniquement insaturé issu d'un composé éthyléniquement insaturé réactif envers une amine, à condition qu'au moins l'un parmi R⁴ et R⁵ soit un groupement éthyléniquement insaturé issu d'un composé éthyléniquement insaturé réactif envers une amine.

2. Composition de polyol polymère selon la revendication 1, dans laquelle le composé éthyléniquement insaturé de structure (I) est le produit de réaction d'un mélange réactionnel comprenant (a) un composé éthyléniquement insaturé réactif envers une amine et (b) une amino diphénylamine comprenant un isomère d'aminodiphénylamine, tel que 4-aminodiphénylamine, 3-aminodiphénylamine et 2-aminodiphénylamine, 4-amino-4'-méthyldiphénylamine, 4-amino-4'-méthoxydiphénylamine, 4-amino-4'-éthoxydiphénylamine, 4-amino-4'-(N,N-diméthylamine)diphénylamine ou 4-amino-4'-isopropyldiphénylamine.

3. Composition de polyol polymère selon la revendication 2, dans laquelle le composé éthyléniquement insaturé réactif envers une amine comprend un composé éthyléniquement insaturé qui contient une fonctionnalité acide, anhydride d'acide, oxirane et/ou isocyanate.

4. Composition de polyol polymère selon la revendication 1 à 3, dans laquelle le polyol de base a une fonctionnalité de 2 à 6 ou 3 à 6, et/ou un indice D'OH de 20 à 200 mg de KOH/g, 20 à 150 mg de KOH/g, 20 à 100 mg de KOH/g, 20 à 50 mg de KOH/g, 25 à 50 mg de KOH/g, ou 30 à 50 mg de KOH/g.

5. Composition de polyol polymère selon l'une des revendications 1 à 4, dans laquelle le composé éthyléniquement insaturé (1) utilisé dans le mélange réactionnel pour produire le polyol polymère comprend du styrène et de l'acrylonitrile, le rapport pondéral du styrène sur l'acrylonitrile (SAN) étant dans la plage de 80:20 à 20:80 ou 75:25 à 25:75.

6. Composition de polyol polymère selon l'une des revendications 1 à 5, dans laquelle le composé éthyléniquement insaturé de structure (I) est présent en une quantité de 0,1 % en poids à 20 % en poids, par rapport au poids total du composé éthyléniquement insaturé utilisé pour préparer la composition de polyol polymère.

7. Composition de polyol polymère selon l'une des revendications 1 à 6, dans laquelle le stabilisant préformé comprend le produit de réaction d'un mélange réactionnel comprenant : (a) un macromère qui contient une insaturation réactive, (b) un composé éthyléniquement insaturé, (c) un initiateur de radicaux libres, (d) un agent de régulation de polymère ; et, éventuellement, (e) un agent de transfert de chaîne.

8. Mousse de polyuréthane comprenant le produit de réaction d'un mélange réactionnel comprenant : (1) un composant polyisocyanate et (2) une composition de polyol comprenant la composition de polyol polymère selon l'une des revendications 1 à 7.

9. Mousse de polyuréthane selon la revendication 8, dans laquelle le mélange réactionnel comprend en outre une amine de structure (II) : 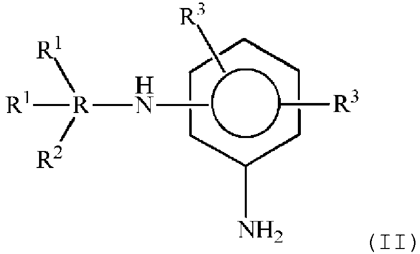
dans laquelle R est un radical aryle, chaque R¹ est indépendamment hydrogène, un radical alkyle en C₁-C₄ ou un radical alcoxy en C₁-C₄, R₂ est hydrogène ou un radical alkyle en C₁-C₄, et R³ est hydrogène, un radical alkyle en C₁-C₄, un radical alcoxy en C₁-C₄, ou un radical de la formule : 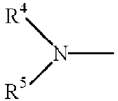
dans laquelle R⁴ est un radical alkyle en C₁-C₁₂, un radical cycloalkyle en C₅-C₁₂, un radical aryle en C₆-C₁₂, ou un radical aralkyle en C₇-C₁₃, et R⁵ est hydrogène, ou un radical alkyle en C₁-C₁₂ tel que 4-aminodiphénylamine, 3-aminodiphénylamine, 2-aminodiphénylamine, 4-amino-4'-méthyldiphénylamine, 4-amino-4'-méthoxydiphénylamine, 4-amino-4'-éthoxydiphénylamine, 4-amino-4'-(N,N-diméthylamine)diphénylamine et/ou 4-amino-4'-isopropyldiphénylamine.

10. Mousse de polyuréthane selon la revendication 9, dans laquelle l'amine de structure (II) est présente en une quantité de 100 à 2 000 ppm ou de 200 à 1 500 ppm, sur la base du poids total de la composition de polyol polymère.

11. Mousse de polyuréthane selon l'une des revendications 8 à 10, dans laquelle le mélange réactionnel comprend en outre un antioxydant phénolique comprenant : 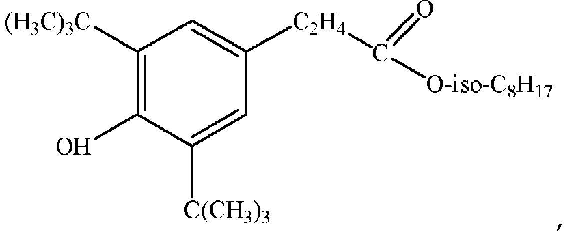 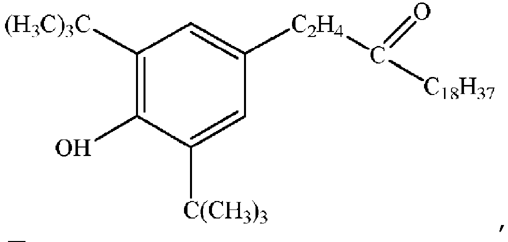 et/ou

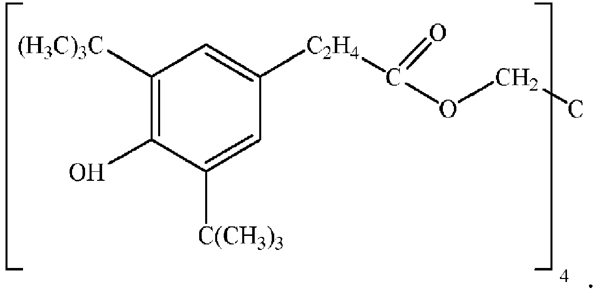

12. Procédé de préparation de la mousse de polyuréthanne selon l'une des revendications 8 à 11, comprenant la mise en réaction du composant polyisocyanate avec un ou plusieurs polyols à un indice d'isocyanate de 70 à 130, 80 à 120 ou 90 à 115.
